# EUROPEAN PATENT SPECIFICATION

(11) **EP 2 309 811 B1**
(45) Date of publication and mention of the grant of the patent: **18.07.2012**
(21) Application number: 09804476.1
(22) Date of filing: 29.07.2009
(51) Int. Cl.: H04W 68/00

(54) **PAGING METHOD, MANAGEMENT NETWORK ELEMENT AND COMMUNICATION SYSTEM**
PAGING-VERFAHREN, VERWALTUNGSNETZELEMENT UND KOMMUNIKATIONSSYSTEM
PROCÉDÉ DE RADIOMESSAGERIE, ÉLÉMENT DE RÉSEAU DE GESTION ET SYSTÈME DE COMMUNICATION

(30) Priority: 07.08.2008 CN 200810135277; 28.09.2008 CN 200810169217
(43) Date of publication of application: 13.04.2011
(73) Proprietor: Huawei Technologies Co., Ltd., Longgang District, Shenzhen Guangdong 518129 (CN)
(72) Inventor: WU, Wenfu, Shenzhen (CN); HU, Weihua, Shenzhen (CN)
(74) Representative: Kreuz, Georg Maria
(86) International application number: PCT/CN2009/072980
(87) International publication number: WO 2010/015176

(56) References cited:
- WO-A1-2007/134216
- WO-A1-2008/088168
- CN-A- 101 111 075
- TELECOM ITALIA ET AL: "Pseudo-CR on Option C for CSG deployments", 3GPP DRAFT; C1-082792, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Zagreb, Croatia; 20080630, 30 June 2008 (2008-06-30), XP050029985, [retrieved on 2008-06-30]
- NOKIA SIEMENS NETWORKS ET AL: "HeNB and CSG addressing", 3GPP DRAFT; R3-081322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kansas City, USA; 20080430, 30 April 2008 (2008-04-30), XP050164495, [retrieved on 2008-04-30]
- HUAWEI: "Paging optimization for CSG deployments", 3GPP DRAFT; C1-083436, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080822, 22 August 2008 (2008-08-22), XP050308631, [retrieved on 2008-08-22]

## Description

### TECHNICAL FIELD

The present invention relates to a communication network technology, and in particular to a paging method, network element (NE), management NE, and communication system.

### BACKGROUND

With the rapid development of network technologies, Internet access technology is being improved continuously. Home access is a new access mode that is being researched by the 3rd generation partnership project (3GPP) and the non-3GPP standards organizations.

A home access mode uses the home wireless access point (AP) and licensed spectrum to enable the user equipment (UE) to access the mobile network through the universal IP access network. The licensed spectrum includes spectrums used on multiple types of networks, such as UMTS terrestrial radio access network (UTRAN), evolved UMTS terrestrial radio access network (E-UTRAN), code division multiple access (CDMA) network, worldwide interoperability for microwave access (WiMAX) network, wireless local area network (WLAN), and high rate packet data (HRPD) network.

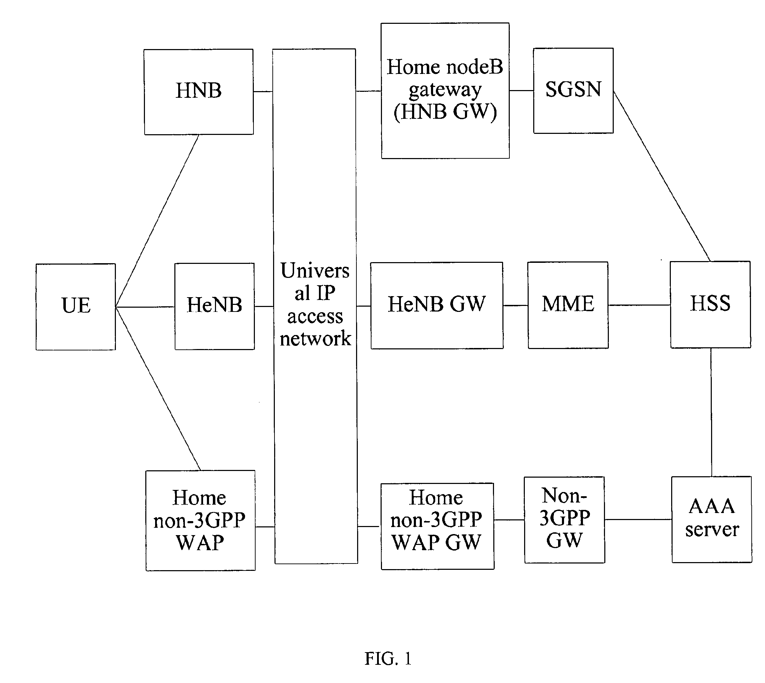

FIG. 1 illustrates the architecture of an exemplary home access system. A home NodeB (HNB) is a home wireless AP (WAP) operating on the UTRAN spectrum. A home evolved NodeB (HeNB) is a home wireless AP operated on the E-UTRAN spectrum. A home non-3GPP wireless AP (home non-3GPP WAP) is a home WAP operated on the non-3GPP network (such as CDMA/Wimax/WLAN/HRPD network) spectrum.

A home NodeB gateway (HNB GW), a home evolved NodeB GW (HeNB GW), and a home non-3GPP WAP gateway (home non-3GPP WAP GW) are the GWs of the home WAPs of the HNB, HeNB and home non-3GPP WAP that are connected through the universal IP access network.

The GW of the home AP implements the functions of managing the home AP and controlling the access, converging the home AP, routing and forwarding the signaling data between the home AP and a NE on a mobile network.

The NEs on the mobile network include: mobility management entity (MME) on the E-UTRAN network, serving GPRS supporting node (SGSN) on the GPRS/UMTS network, and non-3GPP GWs including multiple types of implementation entities on the non-3GPP network, such as an evolved packet data gateway (EPDG) on the WLAN network, a access service network gateway (ASN GW) on the WiMAX network, a access gateway (AGW) on the CDMA network, and an HRPD Serving gateway (HSGW) on the HRPD network.

A home subscriber server (HSS) stores the subscription information about the UE. An authentication, authorization, and accounting (AAA) server carries out the access authentication, authorization, and accounting.

An exemplary architecture of the home access system is only described above. In another home access system, a home AP may be directly connected to a NE on the mobile network.

A closed subscriber group (CSG) is introduced to restrict the access of a UE to a special home WAP. The CSG identifies some UEs (or users), which are allowed to access one or more cells of the operators. But other UEs are not allowed to access these cells. One CSG area includes one or more cells and is identified by a CSG identification (ID). One CSG area can be accessed by only a group of UEs, and other UEs not in this group are not allowed to access the CSG area. An allowed CSG list constructed from the CSG IDs of all the CSG areas that is allowed to access by a UE may be also called a CSG white list. The mobility management NE (SGSN or MME) or the non-3GPP GW and the UE store the allowed CSG list of the UE.

A mobility list mechanism is introduced in order to reduce the update of the location area, for example, tracking area update (TAU) on the E-UTRAN, and routing area update on the UTRAN. Each location area is labeled with a location area ID, for example, tracking area identity (TAI) or routing area identity (RAI). The mobility list includes one or more location area IDs. The moving of the UE among the location areas in the mobility list does not trigger the location update program. The UE mobility list is maintained and sent to the UE by the SGSN, MME, or non-3GPP GW

When mobility management NE (SGSN, MME), or non-3GPP GW sends a paging message to a UE, the mobility management NE (SGSN, MME) or non-3GPP GW sends the paging message to a home AP of all location areas in a mobility list, and the home AP broadcasts the paging message through an air interface.

The prior art has the following disadvantage:

One location area may include thousands of home APs, and a mobility list of UE usually includes multiple location areas. Therefore, the number of home APs is huge; and the usage of home APs for users is limited. In the prior art, a paging message is sent to the home AP in all location areas in the mobility list, producing a great number of unnecessary paging messages. This occupies lots of bandwidth resources and increases the consumption of the system resource.

Document 3GPP C1-082792 relates to a method according to which the MME shall be provided with the CSG ID of the serving cell in the message containing the service request received from the Home eNodeB. The MME shall initiate paging of the UE in all cells, and for paging optimization the MME can page the UE in the CSG where the UE has been registered.

Document 3GPP R3-081322 relates to LTE cell and eNB identification for the non CSG case, and discloses a concept summary for the CSG case.

### SUMMARY

The present disclosure provides a paging method, network element (NE), management NE, and communication system to reduce paging messages and save system resource effectively.

To achieve the preceding objective, the present invention provides the technical solutions as follows:

According to a first aspect of the present invention a paging method comprises:
receiving, by a management network element, NE, a CSG ID supported by an access NE sent from the access NE;
obtaining, by the management NE, an access NE to be paged according to the CSG ID supported by the access NE; and
sending, by the management NE, a paging message to the obtained access NE to be paged, wherein the obtaining an access NE to be paged according to the CSG ID supported by the access NE comprises:
obtaining a CSG ID to be paged, wherein the obtaining of the CSG ID to be paged comprises: determining whether a location area ID corresponding to a CSG ID in an allowed CSG list of a user equipment, UE, is in a mobility list of the UE; if the location ID is in the mobility list, taking the CSG ID as the CSG ID to be paged; wherein if the CSG ID supported by the access NE corresponds to the CSG ID to be paged, the access NE is the access NE to be paged;
   or,
obtaining an allowed CSG list of a UE; wherein if the CSG ID supported by the access NE corresponds to the CSG ID in the allowed CSG list of the UE, the access NE is the access NE to be paged.

According to a second aspect of the present invention a management NE comprises:
a receiving unit, configured to receive a CSG ID supported by an access NE sent from the access NE,;
a paging NE obtaining unit, configured to obtain an access NE to be paged according to the CSG ID supported by the access NE; and
a paging unit, configured to send a paging message to the obtained access NE to be paged, wherein:
   the paging NE obtaining unit is further configured to obtain a CSG ID to be paged; and if the CSG ID supported by the access NE corresponds to the CSG ID to be paged, take the access NE as the access NE to be paged, wherein the paging NE obtaining unit obtaining the CSG ID to be paged is configured to: determine whether a location area ID corresponding to a CSG ID in an allowed CSG list of a user equipment, UE, is in a mobility list of the UE; if the location ID is in the mobility list, take the CSG ID as the CSG ID to be paged; or,
the paging NE obtaining unit is further configured to: if the CSG ID supported by the access NE corresponds to a CSG ID in an allowed CSG list of a UE, take the access NE as the access NE to be paged.

According to a third aspect of the present invention a communication system comprises an access NE and a management NE.

The access NE is configured to report a CSG ID supported by the access NE to a management NE, receive a paging message from the management NE, and send the paging message.

The management NE is configured to receive the CSG ID supported by the access NE" obtain an access NE to be paged according to the CSG ID supported by the access NE; and send a paging message to the obtained access NE to be paged;
wherein the management NE obtaining the access NE to be paged according to the CSG ID supported by the access NE is configured to: obtain a CSG ID to be paged and determine whether a location area ID corresponding to a CSG ID in an allowed CSG list of a user equipment, UE, is in a mobility list of the UE; if the location ID is in the mobility list, take the CSG ID as the CSG ID to be paged; wherein if the CSG ID supported by the access NE corresponds to the CSG ID to be paged, the access NE is the access NE to be paged; or
wherein the management NE obtaining the access NE to be paged according to the CSG ID supported by the access NE is configured to: obtain an allowed CSG list of a UE; wherein if the CSG ID supported by the access NE corresponds to the CSG ID in the allowed CSG list of the UE, the access NE is the access NE to be paged.

With the technical solution provided by the present invention, the paging message is sent in certain areas that may be used by a UE through the allowed CSG list of the UE to be paged. This solves the problem in the prior art where the resources are wasted because the paging message needs to be sent in all the CSG areas of all the location areas in the mobility list. Therefore, the paging messages and the system resource consumption are reduced effectively.

### BRIEF DESCRIPTION OF THE DRAWINGS

FIG. 1 is the structural view of a home access system in the prior art;
FIG. 2 is the flow chart of a paging method according to Embodiment 1 of the present invention;
FIG. 3 is the flow chart of a paging method according to Embodiment 2 of the present invention;
FIG. 4 is the flow chart of another paging method according to Embodiment 2 of the present invention
FIG. 5 is the flow chart of a paging method according to an Example 5 useful for understanding the present invention;
FIG. 6 is the flow chart of another paging method according to Example 5 useful to understand the present invention;
FIG. 7 is the structural view of an NE according to Embodiment 1 of the present invention;
FIG. 8 is the structural view of a management NE according to Embodiment 1 of the present invention;
FIG. 9 is the structural view of an NE according to Embodiment 2 of the present invention;
FIG. 10 is the structural view of a management NE according to Embodiment 2 of the present invention;
FIG. 11 is the structural view of a communication system according to Embodiment 1 of the present invention; and
FIG. 12 is the structural view of a communication system according to Embodiment 2 of the present invention.

### DETAILED DESCRIPTION OF THE EMBODIMENTS

For a clear illustration of the technical solution disclosed in various embodiments of the present invention, the following section describes in detail the embodiments of the present invention in combination with the accompanying drawings. The embodiments described as follows are only exemplary embodiments of the present invention.

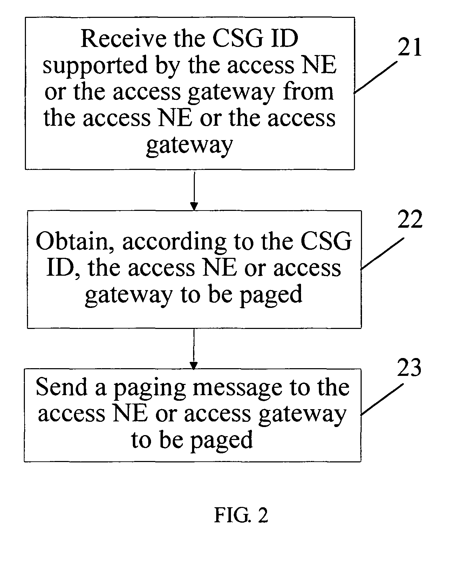

Embodiment 1 of the present invention provides a paging method. As shown in FIG. 2, the paging method includes as follows:
Step 21: A closed subscriber group (CSG) ID supported by an access network element (NE) or an access gateway (GW) is received from the access NE or the access GW.
Step 22: An access NE or access GW to be paged is obtained according to the CSG ID.
Step 23: A paging message is sent to the access NE or access GW to be paged.

With the technical solution provided by Embodiment 1 of the present invention, the access NE or access GW to be paged is obtained and the paging message is sent in certain areas that may be used by a user equipment (UE). This solves the prior-art problem where the resources are wasted because the paging message needs to be sent in all the CSG areas of all the location areas in a mobility list. Therefore, the paging messages and the system resource consumption are reduced effectively.

The following section describes the paging method according to Embodiment 2 of the present invention.

Embodiment 2 of the present invention provides at least two paging methods, which are different from each other in that the connection modes of the involved network entities in the paging process are different.

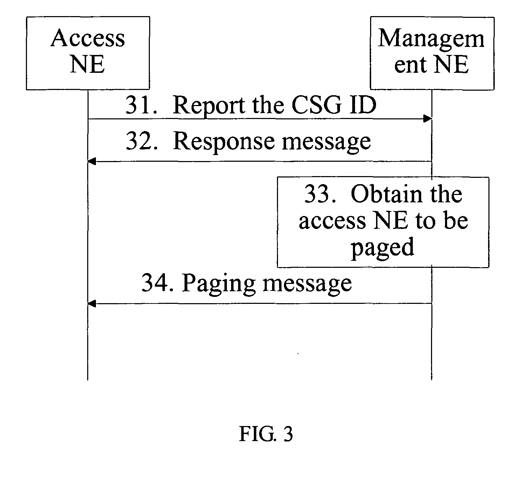

In one paging method, a access NE and a management NE are directly connected, as shown in FIG. 3.

The access NE provided in Embodiment 2 includes at least one of a home NodeB (HNB), a home evolved NodeB (HeNB), a home non-3GPP wireless access point (Home non-3GPP WAP), NB supporting the CSG function (that is, only a group of UEs can access the NB, eNB, or non-3GPP WAP and the access of other UEs is not allowed), evolved NodeB (eNB), and non-3GPP WAP.

The management NE includes a mobility management NE, for example, serving GPRS supporting node (SGSN), mobility management entity (MME), and various types of non-3GPP GW, such as at least one of the evolved packet data GW (EPDG), access service network GW (ASN GW), access GW (AGW), and HRPD Serving GW (HSGW).

Step 31: The access NE directly reports the CSG ID to the management NE.

The access NE reports its supported (in some embodiments, also using "used" instead of "supported", hereinafter using "supported" for unification) CSG ID while reporting its supported location area ID. Two methods are used for reporting the CSG ID or the location area ID.

Method 1: A setup request message reporting the location area ID includes the CSG ID.

To use the existing resources sufficiently, the existing setup request message is used to report the CSG ID of the access NE. On different types of networks, the setup request messages are different. For example, on an evolved UMTS terrestrial radio access network (E-UTRAN), the access NE sends an S1 setup request message to the management NE (for example MME), where the setup request message includes a tracking area (TA) ID supported by the access NE and the CSG ID supported by the access NE; on a UTRAN, the access NE sends an Iu setup request message to the management NE (for example, SGSN), where the Iu setup request message includes a routing area (RA) ID supported by the access NE and the CSG ID supported by the access NE.

Method 2: A special message is used to report the CSG ID to the management NE.

According to Embodiment 2 of the present invention, the access NE sends a CSG notify request message to report the CSG ID to the management NE.

Step 32: The management NE sends a response message to the access NE.

According to different methods for reporting the CSG ID, the response message sent by the management NE to the access NE is a setup response message (response to an Iu interface setup request or S 1 interface setup request) or a CSG notify response message.

Step 33: The management NE obtains the access NE to be paged according to the CSG ID. This step includes at least the following two processing methods:

### PROCESSING METHOD 1:

Step 3311: The management NE obtains a CSG ID to be paged. The management NE first obtains, through at least one of an allowed CSG list of the UE and a mobility list, the CSG ID to be paged.

The CSG ID to be paged can be obtained in at least the following two ways:

The first way is taking the CSG ID in the allowed CSG list of the UE as the CSG ID to be paged.

The subscription data of the allowed CSG list information of the UE is stored in the home subscriber server (HSS). The management NE obtains the allowed CSG list from the HSS. The area identified by the CSG ID in the CSG list is the area that may be used by the UE to be paged. The CSG ID is taken as the CSG ID to be paged.

The second way is determining whether the location area ID corresponding to the CSG ID in the allowed CSG list of the UE is in a mobility list of the UE. If the location area ID is in the mobility list, take the CSG ID as the CSG ID to be paged. The management NE may obtain the CSG ID to be paged in the following manners:
1) The management NE obtains the location area ID corresponding to the CSG ID according to the location area ID and CSG ID reported by the access NE. For each CSG ID in the allowed CSG list of the UE, the management NE queries the location area ID corresponding to the CSG ID and determines whether the location area ID is in the mobility list of the UE. If the location area ID is in the mobility list of the UE, the management NE takes the CSG ID as the CSG ID to be paged.
2) The management NE obtains the CSG ID used by the location area ID according to the location area ID and CSG ID reported by the access NE. The management NE queries each location area ID in the mobility list of the UE, and determines whether each CSG ID used by the location area ID is in the allowed CSG list of the UE; if the CSG ID is in the allowed CSG list of the UE, the management NE takes it as the CSG ID to be paged.

In the preceding second way, both the allowed CSG list of the UE and the mobility list of the UE are used. Only when the location area ID corresponding to the CSG ID in the allowed CSG list of the UE is in the mobility list of the UE, this CSG ID is taken as the CSG ID to be paged. The second way of determining the CSG ID to be paged further reduces the scope of sending the paging message and reduces the unnecessary paging messages effectively.

Step 3312: When the CSG ID from the access NE corresponds to the CSG ID to be paged, the management NE takes the access NE as the access NE to be paged.

The management NE may perform the following operations: 1) The management NE queries, according to the CSG ID to be paged, whether the CSG ID in the access NE supported by the management NE is consistent with the CSG ID to be paged. If they are consistent, the management NE sends a paging message to the access NE.
2) The management NE generates a CSG ID data table beforehand according to the CSG ID reported by the access NE. The data table includes the CSG ID and the information about the access NE corresponding to the CSG ID. The management NE queries the CSG ID data table to obtain the information about the access NE corresponding to the CSG ID according to the CSG ID to be paged. The management NE sends a paging message to the access NE.

### PROCESSING METHOD 2:

When the CSG ID from the access NE corresponds to the CSG ID in the allowed CSG ID list of the UE, the management NE takes the access NE as the access NE to be paged.

In processing method 2, the CSG ID to be paged does not need to be obtained beforehand according to the CSG ID reported by the access NE and the location area ID, and in addition the access NE to which a paging message is sent does not need to be searched out. For each access NE, the management NE queries immediately whether the CSG ID is in the allowed CSG list of the UE according to the CSG ID reported by the access NE when the paging message is sent by the management NE. If it is in the allowed CSG list, the management NE sends a paging message to the access NE.

Embodiment 2 of the present invention also includes: After confirming that the CSG ID is in the allowed CSG list of the UE, the management NE queries whether the location area ID corresponding to the CSG ID is in the mobility list of the UE. If it is in the mobility list, the management NE sends a paging message to the corresponding access NE.

Step 34: The management NE sends a paging message to the access NE to be paged.

The management NE sends a paging message to the access NE to be paged, and then the access NE sends the paging message (for example, broadcasting the paging message through the air interface).

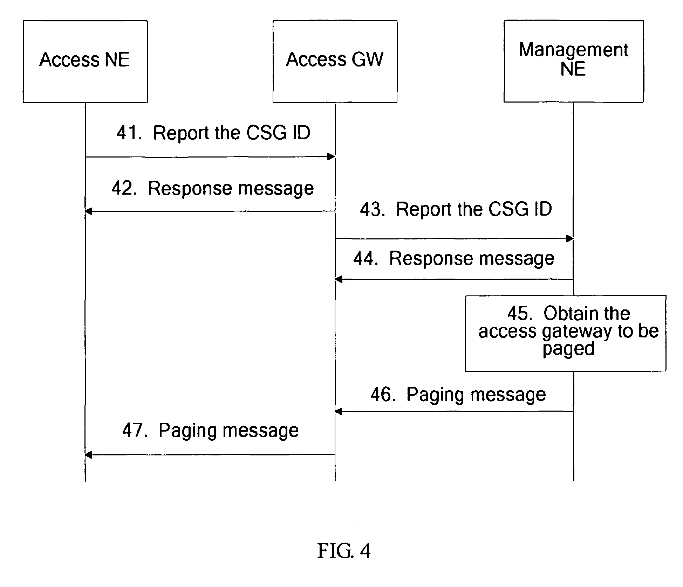

In another paging method, an access NE and a management NE are connected through an access GW, as shown in FIG. 4.

Step 41: The access NE reports a CSG ID to the access GW.

The access NE reports the CSG ID to the access GW with the above method 1 and method 2. Meanwhile, the access NE also reports the location area ID of the access NE, which is not described here.

Step 42: The access GW sends a response message to the access NE.

The response message sent from the access GW to the access NE is a setup response message or a CSG notify response message (refer to the description of step 32) according to the different report methods. The CSG ID and the location area ID of the access NE are stored in the access GW

Step 43: The access GW reports the CSG ID supported by the access GW to the management NE.

The access GW may also report the CSG ID supported by the access GW to the management NE with the above method 1 and method 2. Meanwhile, the access GW also reports the location area ID supported by the access GW to the management NE. The location area ID supported by the access GW is the location area ID supported by the access NE that is managed by the access GW The CSG ID supported by the access GW is the CSG ID supported by the access NE that is managed by the access GW

Step 44: The management NE sends a response message to the access GW

The response message sent from the management NE to the access GW is a setup response message or a CSG notify response message according to the different report methods.

Step 45: The management NE obtains the access GW to be paged.

In step 45, the method of obtaining the access GW to be paged can be referred to step 33.

Step 46: The management NE sends a paging message to the access GW

The management NE sends a paging message to the access GW corresponding to the CSG ID to be paged. The paging message includes the CSG ID to be paged.

Step 47: The access GW sends a paging message to the access NE.

The access GW queries the access NE corresponding to the CSG ID according to the CSG ID included in the paging message, and sends the paging message to the access NE, and then the access NE sends the paging message (for example, broadcast the paging message through the air interface). The access GW may perform the following operations: (1) The access GW queries, according to the CSG ID included in the paging message, whether the CSG ID of its supported access NE is consistent with the CSG ID included in the paging message. If they are consistent, the access GW sends the paging message to the access NE.
2) The management GW generates a CSG ID data table according to the CSG ID reported by the access NE. The data table includes the CSG ID and the information about the access NE corresponding to the CSG ID. The access GW queries the CSG ID data table according to the CSG ID included in the paging message, and obtains the information about the access NE corresponding to the CSG ID. The access GW sends a paging message to the access NE.

With the technical solution provided by Embodiment 2 of the present invention, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

An example 3 useful for understanding the present invention provides a paging method. The method includes:
receiving, by a management NE, a CSG indication information from an access NE or an access GW;
sending, by the management NE, a paging message to the access NE or the access GW supporting the CSG function according to the CSG indication information, where the paging message includes an allowed CSG list of a UE.

The above indication information indicates whether the access NE or the access GW supports the CSG function (in some embodiments, also uses mechanism to instead function, hereinafter using function for unification). That is, the access NE or the access GW allows the access of only a group of UEs, and other UEs not in this group are not allowed to access.

With the technical solution provided by Example 3, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

An example 4 useful for understanding the present invention provides a paging method, which includes as follows:
receiving, by an access network element (NE) or an access GW, a paging message from a management NE, the paging message including an allowed closed subscriber group (CSG) of a user equipment (UE);
determining, by the access NE or the access GW, whether the supported CSG ID is in the allowed CSG list; if it is in the allowed CSG list, sending, by the access NE or the access GW, the paging message.

With the technical solution provided by Example 4, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

The following section describes the paging method provided in Example 5. Example 5 provides at least two paging methods, which are different from each other in that the connection modes of the involved network entities in the paging process are different.

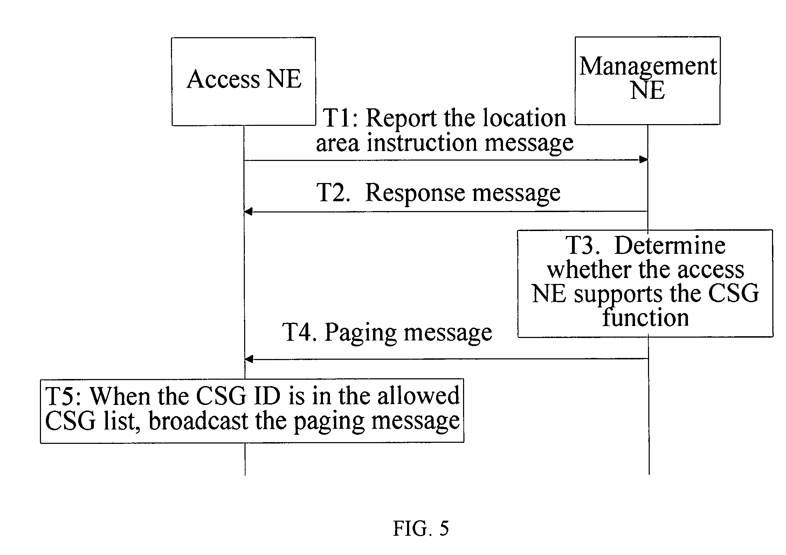

In one paging method, an access NE and an management NE are directly connected, as shown in FIG. 5.

Step T1: The access gateway reports a CSG indication information to the management NE.

The access NE reports CSG indication information to the management NE, and the CSG indication information instructs whether the access NE supports the CSG function or not. Because both the access NE using the CSG function and the access NE without using the CSG function exist on the network, the management NE acquires whether the access NE supports CSG function or not according to the CSG indication information.

The CSG indication information is reported through a setup request message. For example, for the E-UTRAN, the access NE sends an S 1 interface setup request message to the management NE (for example, MME), and the information includes the TA and CSG indication information supported by the access NE; for the UTRAN, the access NE sends an Iu interface setup request message to the management NE, (for example, SGSN) where the message includes the RA and the CSG indication information supported by the access NE. The CSG indication information included by the setup request information can be processed as follows:
1) The setup request message includes CSG indicator information element (IE), the IE represents that the access NE supports CSG function. If there is not such IE in the setup request message, it means the access NE does not support CSG function.
2) Including CSG Type IE in the setup request message. The CSG Type IE has two values:
   0: Indicates that the CSG function is not supported.
   1: Indicates that the CSG function is supported.

If the access NE supports CSG function, set the value of the IE with 1; if not, set the value of the IE with 0.

Step T2: The management NE sends a response message to the access NE.

The response message is a setup response message.

Step T3: The management NE determines whether the access NE supports the CSG function according to the CSG indication information.

Step T4: When the access NE supports the CSG function, the access NE sends a paging message to the access NE, the message including an allowed CSG list of the UE.

The paging message sent to the access NE which does not support the CSG function does not include the allowed CSG list of the UEs.

Step T5: The access NE receives the paging message from the management NE and determines whether the CSG ID supported by the access NE is in the allowed CSG list, if the CSG ID is in the allowed CSG list, the access NE sends the paging message.

In the embodiments of the present invention, the CSG ID in the allowed CSG list of the UE is taken as the CSG ID to be paged. To be specific, the access NE determines whether its supported CSG ID corresponds to the CSG ID in the allowed CSG list. This narrows down the area where the paging message is sent and therefore reduces the number of paging messages.

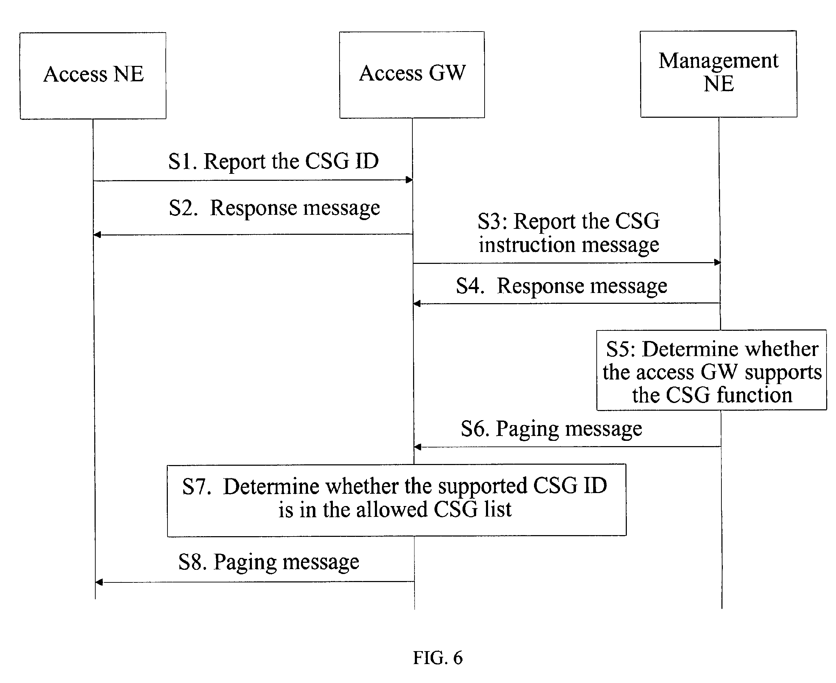

In another paging method, an access NE and a management NE are connected through an access GW, as shown in FIG. 6.

Step S1: The access NE reports its used location area ID and CSG ID to the access GW.

The methods of reporting the location area ID and CSG ID used by the access NE can be referred to in method 1 and method 2 in step 21.

Step S2: The access GW sends a response message to the access NE.

According to different reporting methods, the sent response message is a setup response message or a CSG notify response message, and the access GW stores the CSG ID and location area ID.

Step S3: The access GW reports the CSG indication information to the management NE. The access GW reports the CSG indication information through a setup request message. For example, for an E-UTRAN, the access GW sends an S1 setup request message to the management NE (MME), where the message includes a TA and a CSG indication information supported by the access NE; for a UTRAN, the access GW sends an Iu setup request message to the management NE, where the message includes an RA and a CSG indication information supported by the access GW. The CSG indication information may be processed as follows:
1) A CSG indicator IE is included in the setup request message, where the IE represents the CSG function supported by the access GW If the setup request message does not include this IE, it indicates that the access GW does not support the CSG function.
2) A CSG Type IE is included in the setup request message. The CSG Type IE has two values:
   0:0: Indicates that the CSG function is not supported.
   1: Indicates that the CSG function is supported.

If the access GW supports the CSG function, the value of the IE is set to 1; otherwise, the value of the IE is set to 0.

Step S4: The management NE sends a response message to the access GW.

Step S5: The management NE determines whether the access GW supports the CSG function according to the CSG indication information.

Step S6: When the access GW supports the CSG function, a paging message including the allowed CSG list of the UE is sent to the access GW. When the access GW does not support the CSG function, the paging message not including the allowed CSG list of the UE is sent to the access GW

Step S7: The access GW receives a paging message from the management NE and determines whether the CSG ID supported by the access GW is in the allowed CSG list.

Step S8: When the CSG ID supported by the access GW is in the allowed CSG list, the access GW sends a paging message to the management NE corresponding to the CSG ID.

With the technical solution provided by Example 5, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

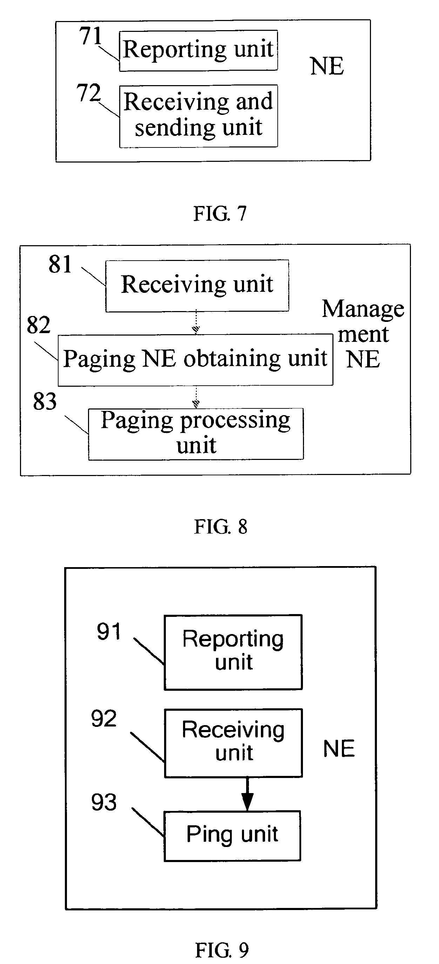

Embodiment 1 of the present invention also provides an NE. As shown in FIG. 7, the NE includes as follows:
a reporting unit 71, configured to report a CSG ID supported the NE; and
a receiving and sending unit 72, configured to receive a paging message and send the paging message.

The above NE can be implemented through the access NE and the access GW. When the access GW is used, the management NE sends a paging message including the CSG ID to be paged to the access GW. The NE further includes: an obtaining unit, configured to obtain the corresponding access NE according to the CSG ID in the paging message received by the receiving and sending unit 72, and trigger the receiving and sending unit 72 to send a paging message to the access NE.

The specific working mode of each function entity in the above NE can be referred to in the method embodiments of the present invention.

Embodiment 1 of the present invention provides a management NE. As shown in FIG. 8, the management NE includes:
a receiving unit 81, configured to receive a CSG ID supported by an access NE or an access GW from the access NE or the access GW;
a paging NE obtaining unit 82, configured to obtain the access NE or the access GW to be paged according to the CSG ID received by the receiving unit 81; and
a paging processing unit 83, configured to send a paging message to the access NE or the access GW obtained by the paging NE obtaining unit 82.

Further, the paging NE obtaining unit 82 is further configured to obtain the CSG ID to be paged; and to take the access NE or the access GW as the access NE or the access GW to be paged if the CSG ID of the access NE or the access GW corresponds to the CSG ID to be paged;
or,
the paging NE obtaining unit 82 is further configured to take the access NE or the access GW as the access NE or access GW to be paged if the CSG ID supported by the access NE or access GW corresponds to the CSG ID in the allowed CSG list of a UE.

The specific working mode of each function entity in the above management NE can be referred to in the method embodiments of the present invention.

With the technical solution provided by embodiments of the present invention, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

Embodiment 2 of the present invention provides an NE. As shown in FIG. 9, the NE includes:
a reporting unit 91, configured to report a CSG indication information of the NE;
a receiving unit 92, configured to receive a paging message from a management NE, where the paging message includes an allowed CSG list of a UE; and
a paging processing unit 93, configured to determine whether the CSG ID supported by the NE is in the allowed CSG list; and to send the paging message if the CSG ID is in the allowed CSG list.

The specific working mode of each function entity in the above NE is referred to in the embodiment of the present invention.

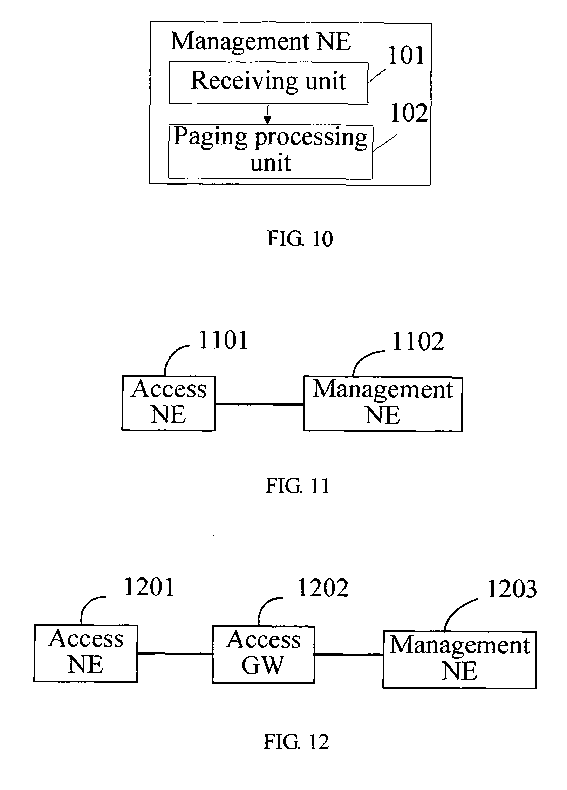

Embodiment 2 of the present invention also provides a management NE. As shown in FIG. 10, the management NE includes:
a receiving unit 101, configured to receive a CSG indication information from an access NE or an access GW; and
a paging processing unit 102, configured to send a paging message to the access NE or the access GW supporting the CSG function according to the CSG indication information, where the paging message includes an allowed CSG list of a UE.

The specific working mode of each function entity in the above management NE can be referred to the method embodiments of the present invention.

With the technical solution provided by embodiments of the present invention, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

Embodiment 1 of the present invention provides a communication system. As shown in FIG. 11, the communication system includes an access NE 1101 and a management NE 1102.

The access NE 1101 is configured to report a CSG ID supported by the access NE 1101 to the management NE 1102, receive a paging message from the management NE 1102, and send the paging message; or
the access NE 1101 is configured to report a CSG indication information to the management NE 1101 to the management NE 1102, receive an allowed CSG list of a UE from the management NE 1102, and determine whether the supported CSG ID is in the allowed CSG list; if the CSG ID is in the allowed CSG list, send a paging message.

The management NE 1102 is configured to receive the CSG ID supported by the access NE 1101, and send the paging message to the corresponding access NE 1101 when the CSG ID corresponds to the CSG ID to be paged or corresponds to the CSG ID in the allowed CSG list of the UE; or
the management NE 1102 is configured to receive the CSG indication information, and send the paging message to the access NE 1101 supporting the CSG function, where the paging message includes the allowed CSG list of the UE.

Embodiment 2 of the present invention provides a communication system. As shown in FIG. 12, the communication system includes an access NE 1201, an access GW 1202, and a management NE 1203. The access NE 1201 is configured to report a CSG ID supported by the access NE 1201 to the access GW 1202, receive a paging message from the access GW, and send the paging message.

The access GW 1202 is configured to report the CSG ID of the GW 1202 to the management NE 1203, receive the paging message from the management NE 1203, and send the paging message to the access NE 1201 using the CSG ID included in the paging message; or
the access GW 1202 is configured to report a CSG indication information of the access GW 1202 to the management NE 1203, receive an allowed CSG list of a UE from the management NE 1203, and determine whether the ID of the supported CSG is in the allowed CSG list; if the CSG ID is in the allowed CSG list, send a paging message to the access NE 1202 corresponding to the CSG ID.

The management NE 1203 is configured to receive the CSG ID message reported by the access GW 1202, and determine whether the CSG ID corresponds to the CSG ID to be paged; if CSG ID corresponds to the CSG ID to be paged, send a paging message to the access GW 1202; or
the management NE 1203 is configured to receive the CSG indication information reported by the access GW 1202, and send the paging message to the access GW 1202 supporting the CSG function according to the CSG indication information, where the paging message includes the allowed CSG list of the UE.

With the communication system provided by embodiments of the present invention, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

The common technical engineer in this field can understand the whole or partial procedure in the above embodiments. The procedure can be implemented through the relevant hardware of the program command. The corresponding software of the embodiments can be stored in a computer media which can be stored and read.

In conclusion, the above are merely exemplary embodiments of the present invention. The present invention is not limited thereto.

## Claims

1. A paging method, comprising:
receiving (31), by a management network element, NE, a closed subscriber group, CSG, identifier, ID, supported by an access network element, NE, sent from the access NE;
obtaining (33), by the management NE, an access NE to be paged according to the CSG ID supported by the access NE; and
sending (34), by the management NE, a paging message to the obtained access NE to be paged,
wherein the obtaining (33) an access NE to be paged according to the CSG ID supported by the access NE comprises:
obtaining a CSG ID to be paged, wherein the obtaining of the CSG ID to be paged comprises: determining whether a location area ID corresponding to a CSG ID in an allowed CSG list of a user equipment, UE, is in a mobility list of the UE; if the location ID is in the mobility list, taking the CSG ID as the CSG ID to be paged; wherein if the CSG ID supported by the access NE corresponds to the CSG ID to be paged, the access NE is the access NE to be paged;
or,
obtaining an allowed CSG list of a UE; wherein if the CSG ID supported by the access NE corresponds to the CSG ID in the allowed CSG list of the UE, the access NE is the access NE to be paged.

2. The method according to claim 1, wherein receiving (31) a CSG ID supported by an access NE sent from the access NE comprises:
receiving a setup request message including the CSG ID sent from the access NE; or
receiving a notify request message including the CSG ID sent from the access NE.

3. A management network element, NE, comprising:
a receiving unit (81), configured to receive a closed subscriber group, CSG, ID supported by an access NE sent from the access NE;
a paging NE obtaining unit (82), configured to obtain an access NE to be paged according to the CSG ID supported by the access NE; and
a paging unit (83), configured to send a paging message to the obtained access NE to be paged,
wherein:
the paging NE obtaining unit (82) is further configured to obtain a CSG ID to be paged; and if the CSG ID supported by the access NE corresponds to the CSG ID to be paged, take the access NE as the access NE to be paged, wherein the paging NE obtaining unit (82) obtaining the CSG ID to be paged is configured to: determine whether a location area ID corresponding to a CSG ID in an allowed CSG list of a user equipment, UE, is in a mobility list of the UE; if the location ID is in the mobility list, take the CSG ID as the CSG ID to be paged; or,
the paging NE obtaining unit (82) is further configured to: if the CSG ID supported by the access NE corresponds to a CSG ID in an allowed CSG list of a UE, take the access NE as the access NE to be paged.

4. A communication system, comprising:
an access network element, NE (1101), configured to report a closed subscriber group, CSG, ID supported by the access NE (1101) to a management NE (1102); receive a paging message from the management NE (1102), and send the paging message;
the management NE (1102) is configured to receive the CSG ID supported by the access NE (1101), obtain an access NE to be paged according to the CSG ID supported by the access NE (1101); and send a paging message to the obtained access NE to be paged;
wherein the management NE (1102) obtaining the access NE to be paged according to the CSG ID supported by the access NE (1101) is configured to: obtain a CSG ID to be paged and determine whether a location area ID corresponding to a CSG ID in an allowed CSG list of a user equipment, UE, is in a mobility list of the UE; if the location ID is in the mobility list, take the CSG ID as the CSG ID to be paged; wherein if the CSG ID supported by the access NE corresponds to the CSG ID to be paged, the access NE is the access NE to be paged; or
wherein the management NE (1102) obtaining the access NE to be paged according to the CSG ID supported by the access NE (1101) is configured to: obtain an allowed CSG list of a UE; wherein if the CSG ID supported by the access NE corresponds to the CSG ID in the allowed CSG list of the UE, the access NE is the access NE to be paged.

## Patentansprüche

1. Paging-Verfahren, umfassend:
Empfangen (31) einer Kennung ID einer geschlossenen Teilnehmergruppe CSG, die durch ein Zugangs-Netzelement bzw. -NE unterstützt wird, die von dem Zugangs-NE gesendet wird, durch ein Verwaltungs-Netzelement bzw. -NE;
Erhalten (33) eines zu pagenden Zugangs-NE durch das Verwaltungs-NE gemäß der durch das Zugangs-NE unterstützten CSG-ID; und
Senden (34) einer Paging-Nachricht durch das Verwaltungs-NE zu dem erhaltenden zu pagenden Zugangs-NE,
wobei das Erhalten (33) eines zu pagenden Zugangs-NE gemäß der durch das Zugangs-NE unterstützten CSG-ID Folgendes umfasst:
Erhalten einer zu pagenden CSG-ID, wobei das Erhalten der zu pagenden CSG-ID Folgendes umfasst:
Bestimmen, ob eine Ortsbereichs-ID, die einer CSG-ID in einer erlaubten CSG-Liste eines Benutzergeräts UE entspricht, in einer Mobilitätsliste des UE steht; wenn die Orts-ID in der Mobilitätsliste steht, Nehmen der CSG-ID als die zu pagende CSG-ID;
wobei, wenn die durch das Zugangs-NE unterstützte CSG-ID der zu pagenden CSG-ID entspricht, das Zugangs-NE das zu pagende Zugangs-NE ist; oder
Erhalten einer erlaubten CSG-Liste eines UE; wobei, wenn die durch das Zugangs-NE unterstützte CSG-ID der CSG-ID in der erlaubten CSG-Liste des UE entspricht, das Zugangs-NE das zu pagende Zugangs-NE ist.

2. Verfahren nach Anspruch 1, wobei das Empfangen (31) einer durch ein Zugangs-NE unterstützten CSG-ID, die von dem Zugangs-NE gesendet wird, Folgendes umfasst:
Empfangen einer Aufbauanforderungsnachricht, die die von dem Zugangs-NE gesendete CSG-ID enthält; oder
Empfangen einer Benachrichtigungsanforderungsnachricht, die die von dem Zugangs-NE gesendete CSG-ID enthält.

3. Verwaltungs-Netzelement bzw. -NE, umfassend:
eine Empfangseinheit (81), die dafür ausgelegt ist, eine ID einer geschlossenen Teilnehmergruppe CSG, die durch ein Zugangs-NE unterstützt wird, die von dem Zugangs-NE gesendet wird, zu empfangen;
eine Einheit (82) zum Erhalten eines Paging-NE, die dafür ausgelegt ist, ein zu pagendes Zugangs-NE gemäß der durch das Zugangs-NE unterstützten CSG-ID zu erhalten; und
eine Paging-Einheit (83), die dafür ausgelegt ist, eine Paging-Nachricht zu dem erhaltenen zu pagenden Zugangs-NE zu senden, wobei die Einheit (82) zum Erhalten des Paging-NE ferner dafür ausgelegt ist, eine zu pagende CSG-ID zu erhalten; und wenn die durch das Zugangs-NE unterstützte CSG-ID der zu pagenden CSG-ID entspricht, das Zugangs-NE als das zu pagende Zugangs-NE zu nehmen, wobei die Einheit (82) zum Erhalten des Paging-NE, die die zu pagende CSG-ID erhält, für Folgendes ausgelegt ist: Bestimmen, ob eine Ortsbereichs-ID, die einer CSG-ID in einer erlaubten CSG-Liste eines Benutzergeräts UE entspricht, in einer Mobilitätsliste des UE steht; und wenn die Orts-ID in der Mobilitätsliste steht, die CSG-ID als die zu pagende CSG-ID zu nehmen; oder
die Einheit (82) zum Erhalten des Paging-NE ferner für Folgendes ausgelegt ist: wenn die durch das Zugangs-NE unterstützte CSG-ID einer CSG-ID in einer erlaubten CSG-Liste eines UE entspricht, Nehmen des Zugangs-NE als das zu pagende Zugangs-NE.

4. Kommunikationssystem, umfassend:
ein Zugangs-Netzelement bzw. -NE (1101), das dafür ausgelegt ist, eine ID einer geschlossenen Teilnehmergruppe CSG, die durch das Zugangs-NE (1101) unterstützt wird, an ein Verwaltungs-NE (1102) zu melden; eine Paging-Nachricht von dem Verwaltungs-NE (1102) zu empfangen und die Paging-Nachricht zu senden;
wobei das Verwaltungs-NE (1102) dafür ausgelegt ist, die durch das Zugangs-NE (1101) unterstützte CSG-ID zu empfangen, ein zu pagendes Zugangs-NE gemäß der durch das Zugangs-NE (1101) unterstützten CSG-ID zu erhalten; und eine Paging-Nachricht zu dem erhaltenen zu pagenden Zugangs-NE zu senden;
wobei das Verwaltungs-NE (1102), das das zu pagende Zugangs-NE gemäß der durch das Zugangs-NE (1101) unterstützten CSG-ID erhält, für Folgendes ausgelegt ist: Erhalten einer zu pagenden CSG-ID und Bestimmen, ob eine Ortsbereichs-ID, die einer CSG-ID in einer erlaubten CSG-Liste eines Benutzergeräts UE entspricht, in einer Mobilitätsliste des UE steht; und wenn die Orts-ID in der Mobilitätsliste steht, die CSG-ID als die zu pagende CSG-ID zu nehmen; wobei, wenn die durch das Zugangs-NE unterstützte CSG-ID der zu pagenden CSG-ID entspricht, das Zugangs-NE das zu pagende Zugangs-NE ist; oder
wobei das Verwaltungs-NE (1102), das das zu pagende Zugangs-NE gemäß der durch das Zugangs-NE (1101) unterstützten CSG-ID erhält, für Folgendes ausgelegt ist: Erhalten einer erlaubten CSG-Liste eines UE; wobei, wenn die durch das Zugangs-NE unterstützte CSG-ID der CSG-ID in der erlaubten CSG-Liste des UE entspricht, das Zugangs-NE das zu pagende Zugangs-NE ist.

## Revendications

1. Procédé d'appel par radiomessagerie, comprenant :
la réception (31), par un élément de réseau, NE, de gestion, d'un identifiant, ID, de groupe d'abonnés fermé, CSG, supporté par un élément de réseau, NE, d'accès,
envoyé par le NE d'accès ;
l'obtention (33), par le NE de gestion, d'un NE d'accès à appeler en fonction de l'ID de CSG supporté par le NE d'accès ; et
l'envoi (34), par le NE de gestion, d'un radiomessage au NE d'accès obtenu à appeler,
dans lequel l'obtention (33) d'un NE d'accès à appeler en fonction de l'ID de CSG supporté par le NE d'accès comprend :
l'obtention d'un ID de CSG à appeler, l'obtention de l'ID de CSG à appeler comprenant : la détermination qu'un ID de zone de positionnement correspondant à un ID de CSG dans une liste de CSG autorisés d'un équipement utilisateur, UE,
figure ou non dans une liste de mobilité de l'UE ; si l'ID de positionnement figure dans la liste de mobilité, l'utilisation de l'ID de CSG comme ID de CSG à appeler ; dans lequel si l'ID de CSG supporté par le NE d'accès correspond à l'ID de CSG à appeler, le NE d'accès est le NE d'accès à appeler ;
ou,
l'obtention d'une liste de CSG autorisés d'un UE ; dans lequel si l'ID de CSG supporté par le NE d'accès correspond à l'ID de CSG dans la liste de CSG autorisés de l'UE, le NE d'accès est le NE d'accès à appeler.

2. Procédé selon la revendication 1, dans lequel la réception (31) d'un ID de CSG supporté par un NE d'accès envoyé par le NE d'accès comprend :
la réception d'un message de requête d'établissement comportant l'ID de CSG envoyé par le NE d'accès ; ou
la réception d'un message de requête de notification comportant l'ID de CSG envoyé par le NE d'accès.

3. Elément de réseau, NE, de gestion, comprenant :
une unité de réception (81), configurée pour recevoir un identifiant ID, de groupe d'abonnés fermé, CSG, supporté par un NE d'accès envoyé par le NE d'accès ;
une unité d'obtention de NE par radiomessagerie (82), configurée pour obtenir un NE d'accès à appeler en fonction de l'ID de CSG supporté par le NE d'accès ; et
une unité d'appel par radiomessagerie (83), configurée pour envoyer un radiomessage au NE d'accès obtenu à appeler,
dans lequel :
l'unité d'obtention de NE par radiomessagerie (82) est configurée en outre pour obtenir une ID de CSG à appeler ; et si l'ID de CSG supporté par le NE d'accès correspond à l'ID de CSG à appeler, utiliser le NE d'accès comme NE d'accès à appeler, dans lequel l'unité d'obtention de NE par radiomessagerie(82) obtenant l'ID de CSG à appeler est configurée pour : déterminer si un ID de zone de positionnement correspondant à un ID de CSG dans une liste de CSG autorisés d'un équipement utilisateur, UE, figure ou non dans une liste de mobilité de l'UE ; si l'ID. de positionnement figure dans la liste de mobilité, utiliser l'ID de CSG comme ID de CSG à appeler ; ou
l'unité d'obtention de NE par radiomessagerie(82) est configurée en outre pour : si l'ID de CSG supporté par le NE d'accès correspond à un ID de CSG dans une liste de CSG autorisés d'un UE, utiliser le NE d'accès comme NE d'accès à appeler.

4. Système de communication, comprenant :
un élément de réseau d'accès, NE (1101), configuré pour signaler un ID de groupe d'abonnés fermé, CSG, supporté par le NE d'accès (1101) à un NE de gestion (1102) ;
recevoir un radiomessage depuis le NE de gestion (1102), et envoyer le radiomessage ;
le NE de gestion (1102) est configuré pour recevoir l'ID de CSG supporté par le NE d'accès (1101), obtenir un NE d'accès à appeler en fonction de l'ID de CSG supporté par le NE d'accès (1101) ; et envoyer un radiomessage au NE d'accès obtenu à appeler ;
dans lequel le NE de gestion (1102) obtenant le NE d'accès à appeler en fonction de l'ID de CSG supporté par le NE d'accès (1101) est configuré pour : obtenir un ID de CSG à appeler et déterminer si un ID de zone de positionnement correspondant à un ID de CSG dans une liste de CSG autorisés d'un équipement utilisateur, UE, figure ou non dans une liste de mobilité de l'UE ; si l'ID de positionnement figure dans la liste de mobilité, utiliser l'ID de CSG comme ID de CSG à appeler ; dans lequel si l'ID de CSG supporté par le NE d'accès correspond à l'ID de CSG à appeler, le NE d'accès est le NE d'accès à appeler ; ou
dans lequel le NE de gestion (1102) obtenant le NE d'accès à appeler en fonction de l'ID de CSG supporté par le NE d'accès (1101) est configuré pour : obtenir une liste de CSG autorisés d'un UE ; dans lequel si l'ID de CSG supporté par le NE d'accès correspond à l'ID de CSG dans la liste de CSG autorisés de l'UE, le NE d'accès est le NE d'accès à appeler.
